(19) **Europäisches Patentamt** / **European Patent Office** / **Office européen des brevets**

(11) **EP 4 773 201 A1**

(12) **EUROPEAN PATENT APPLICATION**
published in accordance with Art. 153(4) EPC

(43) Date of publication:
08.07.2026 Bulletin 2026/28

(21) Application number: 25781287.5

(22) Date of filing: 07.01.2025

(51) International Patent Classification (IPC):
H01M 4/13 (2010.01)     H01M 4/583 (2010.01)
H01M 4/62 (2006.01)     H01M 4/04 (2006.01)
H01M 10/0525 (2010.01)

(52) Cooperative Patent Classification (CPC):
Y02E 60/10

(86) International application number:
PCT/CN2025/071089

(87) International publication number:
WO 2025/208990 (09.10.2025 Gazette 2025/41)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.03.2024 CN 202410383524

(71) Applicant: Ningde Amperex Technology Limited
Ningde, Fujian 352100 (CN)

(72) Inventor: ZHANG, Yanru
Ningde, Fujian 352100 (CN)

(74) Representative: Kraus & Lederer PartGmbB
Thomas-Wimmer-Ring 15
80539 München (DE)

(54) **SECONDARY BATTERY AND ELECTRIC EQUIPMENT**

(57) This application relates to the technical field of electrochemical apparatuses, and in particular, to a secondary battery and an electric device. The secondary battery includes a negative electrode plate, where the negative electrode plate includes a current collector, a first active material layer, and a second active material layer, the first active material layer is disposed on at least one surface of the current collector, the second active material layer is disposed on a side of the first active material layer facing away from the current collector, the first active material layer includes a silicon-based material and a first graphite material, the second active material layer includes a second graphite material and an inorganic material, and a ratio of a particle size $D_v50$ of the inorganic material to a particle size $D_v50$ of the second graphite material is less than 0.23. The secondary battery and the electric device can improve the problem of overpressure of the second active material layer, suppression by the second active material layer on swelling of the silicon-based material can be maintained, and structural integrity and structural stability of the negative electrode plate can be enhanced.

FIG. 3

## Description

### CROSS-REFERENCE TO RELATED APPLICATIONS

This application claims priority to the Chinese Patent Application No. 202410383524.7, filed with the China National Intellectual Property Administration on March 31, 2024 and entitled "SECONDARY BATTERY AND ELECTRIC DEVICE", which is incorporated herein by reference in its entirety.

### TECHNICAL FIELD

This application relates to the technical field of electrochemical apparatuses, and in particular, to a secondary battery and an electric device.

### BACKGROUND

The negative electrode active material in lithium-ion batteries is generally graphite. Adding the silicon element to the negative electrode active material significantly improves the theoretical specific capacity and energy density of the negative electrode plate. Therefore, lithium-ion batteries with silicon-based negative electrode plates are the future development direction.

During the charge and discharge of lithium-ion batteries, silicon particles undergo lithiation and delithiation, causing significant swelling and contraction of the silicon particles, which compromises the structural integrity and structural stability of the negative electrode plate. In the prior art, a solution of adding a graphite layer to a silicon-based active material layer is provided to suppress silicon particle swelling, thereby mitigating damage to the negative electrode plate.

### SUMMARY

The inventor has found through research that in a solution of adding a graphite layer on a silicon-based active material layer to suppress silicon particle swelling, during the rolling of a negative electrode plate, graphite particles in the added graphite layer are prone to breakage, which easily leads to failure in suppressing silicon particle swelling and causes capacity loss of the negative electrode plate.

Embodiments of this application aim to provide a secondary battery and an electric device capable of at least mitigating failure in suppressing silicon-based material swelling by the graphite layer and capacity loss of the negative electrode plate.

To address the above technical problems, one technical solution adopted by some embodiments of this application is to provide a secondary battery, where the secondary battery includes a negative electrode plate, the negative electrode plate includes a current collector, a first active material layer, and a second active material layer, the first active material layer is disposed on at least one surface of the current collector, the second active material layer is disposed on a side of the first active material layer facing away from the current collector, the first active material layer includes a silicon-based material and a first graphite material, the second active material layer includes a second graphite material and an inorganic material, and a ratio of a particle size $D_v50$ of the inorganic material to a particle size $D_v50$ of the second graphite material is less than or equal to 0.23. Limiting the ratio of the particle size $D_v50$ of the inorganic material to the particle size $D_v50$ of the second graphite material to less than or equal to 0.23 allows the inorganic material to fill the gaps of the second graphite material, providing lubrication and buffering to the second graphite material, reducing a risk that the second graphite material is crushed during rolling of the negative electrode plate, thereby mitigating the weakening of swelling suppression of the second active material layer on the silicon-based material, and enhancing cycling performance of the secondary battery.

In some embodiments, the ratio of the particle size $D_v50$ of the inorganic material to the particle size $D_v50$ of the second graphite material is 0.04 to 0.1. At this ratio, particle breakage of the second graphite material is minimized, a better capacity retention rate of the secondary battery can be achieved, and the kinetic performance of the second active material layer is optimal.

In some embodiments, the particle size $D_v50$ of the inorganic material is 0.3 $\mu$m to 2 $\mu$m, and the particle size $D_v50$ of the second graphite material is 10 $\mu$m to 15 $\mu$m.

In some embodiments, a mass percentage of the inorganic material in the second active material layer is 0.1wt% to 5wt%. With this limitation, the lubrication and buffering provided by the inorganic material to the second graphite material and the energy density of the secondary battery can be balanced. In this case, the inorganic material provides certain lubrication and buffering to the second graphite material, so that the graphite particles in the second graphite material are less prone to breakage during rolling of the negative electrode plate while the secondary battery has a high energy density.

In some embodiments, the mass percentage of the inorganic material in the second active material layer is preferably 1wt% to 3wt%.

In some embodiments, a mass ratio of the second active material layer to the first active material layer is 0.2:1 to 2:1. When the mass ratio of the second active material layer to the first active material layer is less than 0.2, the capability of the second active material layer to restrict the swelling of the silicon-based material in the first active material layer is limited, leading to a relatively rapid increase in the swelling rate of the battery; when the mass ratio of the second active material layer to the first active material layer is greater than 2, a compacted density of the rolled first active material layer is relatively high, and an excessively high compacted density may cause particle breakage of the first graphite material in the first active material layer, resulting in capacity loss of the negative electrode plate. Therefore, the mass ratio of the second active material layer to the first active material layer is preferably in the range of 0.2:1 to 2:1.

In some embodiments, the mass of the silicon-based material is denoted as $m_1$, the mass of the first graphite material is denoted as $m_2$, and $m_1/(m_1+m_2)$ is 5% to 30%. Limiting the ratio of the mass $m_1$ of the silicon-based material to the mass $m_2$ of the first graphite material to not less than 5% ensures the energy density of the secondary battery, and limiting the ratio to not more than 30% not only reduces lithium precipitation but also ensures the restraining of the first graphite material on silicon, maintaining the structural integrity and structural stability of the negative electrode plate.

In some embodiments, a ratio of a particle size $D_v50$ of the silicon-based material to a particle size $D_v50$ of the first graphite material is 0.1 to 0.5. Limiting the ratio of the particle size $D_v50$ of the silicon-based material to the particle size $D_v50$ of the first graphite material to not less than 0.1 may reduce side reactions, decrease a cycling attenuation rate of the secondary battery, and ensure a capacity retention rate of the secondary battery. Limiting the ratio of the particle size $D_v50$ of the silicon-based material to the particle size $D_v50$ of the first graphite material to not more than 0.5 allows the relatively larger-sized first graphite material to restrain relatively smaller-sized silicon, reducing silicon swelling and the resulting displacement, and enhancing the structural integrity and structural stability of the negative electrode plate.

In some embodiments, the ratio of the particle size $D_v50$ of the silicon-based material to the particle size $D_v50$ of the first graphite material is 0.2 to 0.3. The particle size relationship between the silicon-based material and the first graphite material is further limited to balance the capacity retention rate of the secondary battery and the restraining of the first graphite material on silicon.

In some embodiments, the particle size $D_v50$ of the silicon-based material is 4 $\mu$m to 10 $\mu$m, and the particle size $D_v50$ of the first graphite material is 16 $\mu$m to 40 $\mu$m.

In some embodiments, the inorganic material includes one or more selected from the group consisting of alumina, garnet, magnesium oxide, titanium oxide, hafnium dioxide, tin oxide, cerium dioxide, nickel oxide, zinc oxide, calcium oxide, zirconium oxide, yttrium oxide, boehmite, aluminum hydroxide, magnesium hydroxide, calcium hydroxide, and barium sulfate.

In some embodiments, the inorganic material is alumina and/or boehmite, which have good electrochemical stability and are readily available.

In some embodiments, the silicon-based material includes one or more selected from the group consisting of elemental silicon, silicon oxide, silicon carbide, and a silicon alloy.

In some embodiments, the secondary battery further includes a free electrolyte solution. Incorporating the free electrolyte solution may increase the transport rate of lithium ions, ensuring a charge-discharge rate, thereby improving the kinetic performance of the secondary battery.

In some embodiments, the first active material layer includes the inorganic material. The inorganic material is added to the first active material layer, and the inorganic material may fill the gaps of the first graphite material. In this case, during rolling of the negative electrode plate, the inorganic material can provide buffering and lubrication to the first graphite material, helping to reduce a risk that the first graphite material is crushed, thereby mitigating failure in suppressing silicon swelling and capacity loss of the negative electrode plate due to breakage of the first graphite material.

To address the above technical problems, another technical solution adopted by some embodiments of this application is to provide an electric device, where the electric device includes a load and the secondary battery according to any one of the above, and the secondary battery is configured to supply power to the load.

Different from the related art, in the secondary battery and electric device in these embodiments of this application, the ratio of the particle size $D_v50$ of the inorganic material to the particle size $D_v50$ of the second graphite material is less than 0.23, allowing the inorganic material to fill the gaps of the second graphite material, thereby providing lubrication and buffering to the second graphite material. During rolling of the negative electrode plate, graphite particle breakage can be reduced, overpressure of the second active material layer can be alleviated, the suppression by the second active material layer on silicon-based material swelling can be maintained, the structural integrity and structural stability of the negative electrode plate can be enhanced, and performance deterioration of the negative electrode plate can be mitigated.

The above description is only an overview of the technical solutions of this application. To provide a clearer understanding of the technical means of this application and enable implementation according to the content of the specification, and to make the above and other objectives, features, and advantages of this application more apparent and understandable, specific embodiments of this application are provided below.

## BRIEF DESCRIPTION OF DRAWINGS

One or more embodiments are exemplarily described with reference to their corresponding drawings. These exemplary descriptions do not limit some embodiments, and elements with the same reference signs in the drawings represent similar elements. Unless otherwise specified, the drawings do not constitute a scale limitation.

FIG. 1 is a schematic diagram of a framework of an electric device according to an embodiment of this application;
FIG. 2 is a schematic structural diagram of a negative electrode plate according to an embodiment of this application;
FIG. 3 is an SEM photograph of a negative electrode plate according to an embodiment of this application;
FIG. 4 is another SEM photograph of a negative electrode plate according to an embodiment of this application;
FIG. 5 is a cycling life diagram of secondary batteries of Comparative Example 1 and Example 1 according to this application;
FIG. 6 is a cycling swelling rate diagram of secondary batteries of Comparative example 1 and Example 1 according to this application;
FIG. 7 is a cycling life diagram of secondary batteries of Example 1 and Example 2 according to this application; and
FIG. 8 is a cycling swelling rate diagram of secondary batteries of Example 1 and Example 2 according to this application.

Reference signs in the detailed description are as follows:
1000. electric device; 100. secondary battery; 200. load; 10. negative electrode plate; 1. current collector; 2. first active material layer; and 3. second active material layer.

## DETAILED DESCRIPTION

To make the objectives, technical solutions, and advantages of this application clearer, this application is further described in detail below with reference to the drawings and embodiments. It should be understood that the specific embodiments described herein are only used to explain this application and are not used to limit this application. It should be noted that when an element is described as "fastened to" another element, it may be directly on the other element, or one or more intervening elements may be present. When an element is described as "connected to" another element, it may be directly connected to the another element, or one or more intervening elements may be present. It should be noted that, unless conflicting, the features in some embodiments of this application can be combined with each other and are within the protection scope of this application. Additionally, although functional modules are divided in an apparatus schematic diagram and a logical sequence is shown in the flowchart, in some cases, the steps shown or described may be performed in a different module division or sequence than in the apparatus schematic diagram or flowchart.
Unless otherwise defined, all technical and scientific terms used herein have the same meaning as commonly understood by those skilled in the technical field of this application; the terms used herein are only for the purpose of describing specific embodiments and are not intended to limit this application; the terms "include" and "have" and any variations thereof in the specification, claims, and the above description of the drawings of this application are intended to cover non-exclusive inclusion.
In the description of some embodiments of this application, technical terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", and "radial", "circumferential" indicate orientations or positional relationships based on those shown in the drawings, and are only for the convenience of describing some embodiments of this application and simplifying the description, rather than indicating or implying that the referred apparatus or element must have a specific orientation or be constructed and operated in a specific orientation, and therefore should not be construed as limitations to these embodiments of this application.
In the description of some embodiments of this application, the terms "first" and "second" are used to define components merely for the convenience of distinguishing corresponding components. Unless otherwise specified, these terms have no special meaning and should not be construed as limitations to the protection scope of this application. In the description of these embodiments of this application, "multiple" means two or more, unless explicitly and specifically limited otherwise.
Unless otherwise defined, all technical and scientific terms used in this specification have the same meaning as commonly understood by those skilled in the technical field of this application. The terms used in the specification of this application are only for the purpose of describing specific embodiments and are not intended to limit this application. The term "and/or" used in this specification includes any and all combinations of one or more related listed items.
Furthermore, the technical features involved in different embodiments of this application described below can be combined with each other as long as they do not conflict with each other.

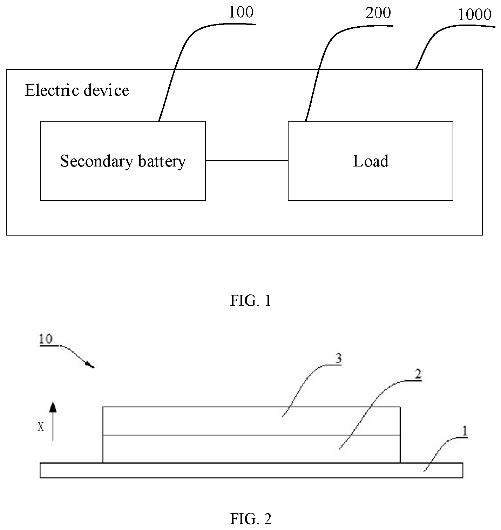

An embodiment of this application provides an electric device 1000. As shown in FIG. 1, the electric device 1000 includes a secondary battery 100 and a load 200, and the secondary battery 100 is configured to supply power to the load 200.

The electric device 1000 in some embodiments of this application includes, but is not limited to, Bluetooth headsets, mobile phones, tablets, laptops, electric toys, electric tools, electric bicycles, electric vehicles, ships, spacecraft, and the like. Electric toys may include fixed or mobile electric toys, such as game consoles, electric car toys, electric ship toys, and electric airplane toys. Spacecraft may include airplanes, rockets, space shuttles, and spaceships.

The load 200 in some embodiments of this application may be a display, speaker, processor, light-emitting device, motor, or the like. It should be understood that a type of load 200 is not limited thereto.

For the above secondary battery 100, the secondary battery 100 may be a pouch battery, a prismatic battery, a cylindrical battery, or the like. The secondary battery 100 includes a negative electrode plate 10, and the negative electrode plate 10 may be in a wound form or a stacked form.

In some embodiments of this application, as an example for illustration, the negative electrode plate 10 is in a stacked form.

As shown in FIG. 2, the negative electrode plate 10 includes a current collector 1, a first active material layer 2, and a second active material layer 3, where the first active material layer 2 is disposed on at least one surface of the current collector 1, and the second active material layer 3 is disposed on a side of the first active material layer 2 facing away from the current collector 1. The first active material layer 2 may be disposed on one surface of the current collector 1 along a thickness direction X, or on two opposite surfaces of the current collector 1 along the thickness direction X, to be specific, two first active material layers are respectively disposed on two opposite surfaces of the current collector 1. When two first active material layers 2 are disposed on two opposite surfaces of the current collector 1 along the thickness direction, two second active material layers 3 are respectively disposed on surfaces of the two first active material layers 2 facing away from the current collector 1. It should be understood that multiple first active material layers 2 may be disposed at intervals on one surface of the current collector 1; multiple second active material layers 3 may be disposed at intervals on one surface of the first active material layer 2.

For the above current collector 1, the current collector 1 is a conductor and is in a sheet form, and the current collector 1 may include copper foil, aluminum foil, nickel foil, stainless steel foil, titanium foil, nickel foam, copper foam, a polymer substrate coated with conductive metal, or any combination thereof.

For the above first active material layer 2, an active material in the first active material layer 2 includes a silicon-based material and a first graphite material.

For the above second active material layer 3, an active material in the second active material layer 3 includes a second graphite material, and the second active material layer 3 further includes an inorganic material.

It should be noted that during charge and discharge of the secondary battery 100, a silicon-based material in the first active material layer 2 undergoes lithium ion deintercalation and intercalation, causing the silicon-based material to experience volume swelling exceeding 100%. Such a high volume swelling rate compromises the structural stability and integrity of the first active material layer 2, and damages a solid electrolyte interface (Solid Electrolyte Interface, SEI) film, causing a free electrolyte solution to penetrate into an interior of the first active material layer 2, triggering a series of unstable reactions such as decomposition of the free electrolyte solution and repeated damage to the SEI film, significantly deteriorating cycling performance of the secondary battery 100. To address this, a second active material layer 3 is added on the side of the first active material layer 2 facing away from the current collector 1, where the second active material layer contains a second graphite material, suppressing swelling displacement of the silicon-based material in the first active material layer 2, mitigating the above issues.

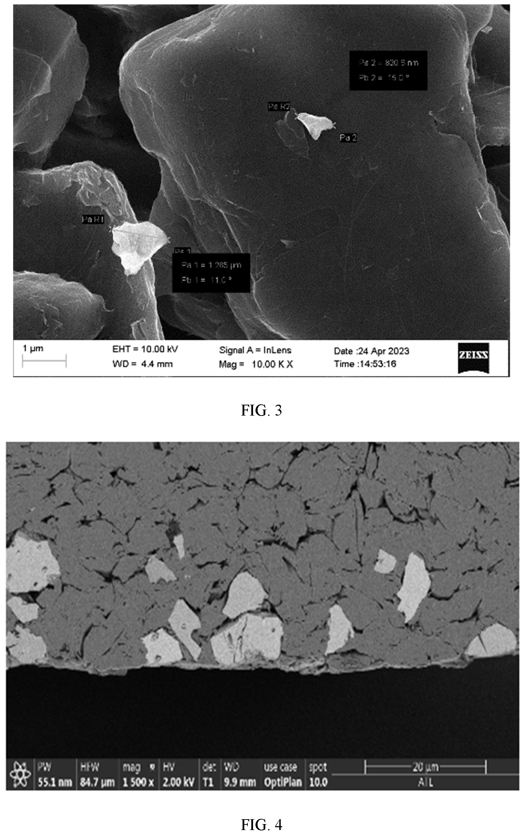

To compact the first active material layer 2 and the second active material layer 3, the negative electrode plate 10 needs to be rolled during the production process. During rolling, a roller directly contacts the second active material layer 3, subjecting the second active material layer 3 to greater pressure, making particles (such as the second graphite material) in the second active material layer 3 prone to breakage under rolling. This may weaken or even completely fail the suppression of the second active material layer 3 on the swelling of the silicon-based material in the first active material layer 2, and also affect a capacity of the negative electrode plate 10. To mitigate this issue, in some embodiments of this application, the second active material layer 3 includes a second graphite material and an inorganic material, and a ratio of a particle size $D_v50$ of the inorganic material to a particle size $D_v50$ of the second graphite material is less than or equal to 0.23, allowing the inorganic material to fill gaps of the second graphite material. Refer to FIG. 3. FIG. 3 is an SEM (Scanning Electron Microscope, Scanning Electron Microscope) photograph of the negative electrode plate 10. In FIG. 3, the larger particles are the second graphite material, and the smaller particles are the inorganic material. As shown in FIG. 3, the inorganic material is mainly distributed in the gaps of the second graphite material. The inorganic material filling the gaps of the second graphite material provides lubrication and buffering to the second graphite material, reducing a risk of graphite particle breakage during rolling of the negative electrode plate 10 or when the second active material layer 3 is subjected to pressure, thereby mitigating the issues of weakened suppression of silicon-based material swelling by the second active material layer 3 and capacity loss of the negative electrode plate, and enhancing the cycling performance of the secondary battery 100.

The particle size $D_v50$ refers to a particle size of a material where the cumulative distribution by volume reaches 50% as counted from the small particle size side, and the particle size $D_v50$ may be measured with a laser particle size analyzer in accordance with GB/T 19077-2016 "Particle Size Analysis-Laser Diffraction Methods".

It should be noted that during the rolling process of the negative electrode plate 10, the ratio of the particle size $D_v50$ of the inorganic material to the particle size $D_v50$ of the second graphite material affects a compacted density of the negative electrode plate and a capacity retention rate of the secondary battery. The capacity retention rate is defined as a capacity retention rate of the secondary battery after several charge-discharge cycles, which is obtained through dividing, by a capacity for the first charge-discharge cycle, a capacity of the secondary battery after the secondary battery undergoes several charge-discharge cycles. When the ratio of the particle size $D_v50$ of the inorganic material to the particle size $D_v50$ of the second graphite material is excessively large, the compacted density tends to decrease, leading to a narrower processing window for the second graphite material, increasing processing difficulty, and reducing the capacity retention rate. Therefore, the ratio of the particle size $D_v50$ of the inorganic material to the particle size $D_v50$ of the second graphite material is set to be less than 0.23, which allows the inorganic material to fill the gaps of the second graphite material, providing lubrication and buffering to the second graphite material, alleviating particle breakage of the second graphite material, mitigating overpressure of the negative electrode plate, enhancing the cycling performance of the secondary battery, and ensuring a relatively wide processing window for the second graphite material.

Further, the ratio of the particle size $D_v50$ of the inorganic material to the particle size $D_v50$ of the second graphite material is 0.04 to 0.1. Through experiments, the applicant has found that when the ratio of the particle size $D_v50$ of the inorganic material to the particle size $D_v50$ of the second graphite material is 0.04 to 0.1, the negative electrode plate may have an appropriate compacted density, and a relatively good capacity retention rate of the secondary battery can be ensured. Relationships between the ratio of the particle size $D_v50$ of the inorganic material to the particle size $D_v50$ of the second graphite material, the compacted density of the second active material layer 3, and the capacity retention rate of the secondary battery are detailed in the experimental data provided later.

Refer to FIG. 4. FIG. 4 is an SEM photograph of the rolled negative electrode plate 10, where an upper side is the second active material layer 3, and a lower side is the first active material layer 2. As shown in FIG. 4, after adding the inorganic material to the second active material layer 3, there is no particle breakage in either the first active material layer 2 or the second active material layer 3, indicating that neither the first graphite material nor the second graphite material exhibits overpressure phenomena.

In some embodiments, the particle size $D_v50$ of the inorganic material is 0.3 $\mu$m to 2 $\mu$m. The particle size $D_v50$ of the second graphite material is 10 $\mu$m to 15 $\mu$m.

In some embodiments, a mass percentage of the inorganic material in the second active material layer 3 is 0.1wt% to 5wt%. When the mass percentage of the inorganic material in the second active material layer 3 is less than 0.1wt%, the lubrication of the inorganic material on the second graphite material is significantly reduced. When the mass percentage of the inorganic material in the second active material layer 3 is greater than 5wt%, the inorganic material occupies a large proportion of the second active material layer 3, reducing a proportion of the second graphite material, severely reducing an energy density of the secondary battery 100. Therefore, in this application, the mass percentage of the inorganic material in the second active material layer 3 is 0.1wt% to 5wt%. A relationship between the mass percentage of the inorganic material in the second active material layer 3 and the energy density of the secondary battery 100 is detailed in the experimental data provided later.

Preferably, the mass percentage of the inorganic material in the second active material layer 3 is 1wt% to 3wt%. The mass percentage of the inorganic material in the second active material layer 3 is set to 1wt% to 3wt%, so that the inorganic material can provide good lubrication and buffering on the second graphite material, and the secondary battery 100 has a good energy density.

In some embodiments, a mass ratio of the second active material layer to the first active material layer ranges from 0.2:1 to 2:1. When the mass ratio of the second active material layer to the first active material layer is less than 0.2, the capability of the second active material layer to restrict the swelling of the silicon-based material in the first active material layer is limited, leading to a relatively rapid increase in the swelling rate of the battery; when the mass ratio of the second active material layer to the first active material layer is greater than 2, a compacted density of the rolled first active material layer is relatively high, and an excessively high compacted density may cause particle breakage of the first graphite material in the first active material layer, resulting in capacity loss of the negative electrode plate. Therefore, the mass ratio of the second active material layer to the first active material layer is preferably in the range of 0.2:1 to 2:1. In some embodiments, the mass of the silicon-based material is denoted as $m_1$, the mass of the first graphite material is denoted as $m_2$, and $m_1/(m_1+m_2)$ is 5% to 30%. Limiting the ratio of the mass $m_1$ of the silicon-based material to the mass $m_2$ of the first graphite material to not less than 5% ensures the energy density of the secondary battery, and limiting it to not more than 30% not only reduces lithium precipitation but also ensures the restraining of the first graphite material on silicon, maintaining the structural integrity and structural stability of the negative electrode plate 10.

In some embodiments, the ratio of the particle size $D_v50$ of the silicon-based material in the first active material layer 2 to the particle size $D_v50$ of the first graphite material is 0.1 to 0.5, allowing the silicon-based material to fill gaps of the first graphite material, enabling the first graphite material to restrain the swelling displacement of the silicon-based material, mitigating damage to the negative electrode plate 10.

It should be noted that when the ratio of the particle size $D_v50$ of the silicon-based material to the particle size $D_v50$ of the first graphite material is less than 0.1, the particle size of the silicon-based material is small, leading to a large specific surface area, causing excessive side reactions and accelerating cycling degradation of the secondary battery. When the ratio of the particle size $D_v50$ of the silicon-based material to the particle size $D_v50$ of the first graphite material is greater than 0.5, the swelling rate of the secondary battery increases rapidly because the particle sizes of the silicon-based material and the first graphite material are relatively close, resulting in poor co-embedding of the silicon-based material and the first graphite material, causing a sharp increase in the swelling rate of the negative electrode plate. Therefore, the ratio of the particle size $D_v50$ of the silicon-based material to the particle size $D_v50$ of the first graphite material is set to 0.1 to 0.5.

In some embodiments, the ratio of the particle size $D_v50$ of the silicon-based material to the particle size $D_v50$ of the first graphite material is 0.2 to 0.3. When the ratio of the particle size $D_v50$ of the silicon-based material to the particle size $D_v50$ of the first graphite material is greater than 0.3, the trend of capacity retention rate increase becomes relatively flat with increasing ratio, so the benefit of increasing the ratio on the capacity retention rate is relatively small when the ratio is greater than 0.3; when the ratio is less than 0.2, the trend of swelling rate decrease becomes relatively flat with decreasing ratio, so the benefit of decreasing the ratio on the swelling rate is relatively small when the ratio is less than 0.2. Considering both swelling rate and capacity retention rate, the ratio of the particle size $D_v50$ of the silicon-based material to the particle size $D_v50$ of the first graphite material is preferably 0.2 to 0.3.

In some embodiments, the particle size $D_v50$ of the silicon-based material is 4 $\mu$m to 10 $\mu$m, and the particle size $D_v50$ of the first graphite material is 16 $\mu$m to 40 $\mu$m.

It should be noted that in some embodiments of this application, the particle size $D_v50$ of the second graphite material is 10 $\mu$m to 15 $\mu$m, which is smaller than the range of 16 $\mu$m to 40 $\mu$m for the particle size $D_v50$ of the first graphite material. This is because, during rolling of the negative electrode plate 10, the roller directly contacts the second active material layer 3, and the second active material layer 3 is subjected to greater pressure than the first active material layer 2. The second graphite material with the smaller particle size is less prone to breakage compared with the first graphite material with the larger particle size, thereby mitigating easy breakage of the second graphite material in the second active material layer 3 during rolling.

In some embodiments, the inorganic material may be one or more selected from the group consisting of alumina, garnet, magnesium oxide, titanium oxide, hafnium dioxide, tin oxide, cerium dioxide, nickel oxide, zinc oxide, calcium oxide, zirconium oxide, yttrium oxide, boehmite, aluminum hydroxide, magnesium hydroxide, calcium hydroxide, and barium sulfate.

Further, the inorganic material is alumina and/or boehmite, which have good electrochemical stability and are readily available. Further, the inorganic material is alumina, which has high hardness.

In some embodiments, the second graphite material may be one or more selected from the group consisting of hard carbon, soft carbon, and graphite.

In some embodiments, an OI value of the second graphite material is less than or equal to 10. The OI value (Orientation Index, Orientation Index) of the graphite material indicates a degree of crystal orientation consistency in the graphite material and is an important factor relating to the low swelling characteristics of a graphite negative electrode active material. Generally, a low OI value indicates a high degree of isotropy in graphite particles, which is beneficial for suppressing swelling during cycling. The OI value can be measured by calculation following XRD (X-ray diffraction, X-ray diffraction) test of the 110 and 002 or 004 characteristic peaks of graphite in the electrode plate. During test of a diffraction pattern of a horizontally placed electrode plate sample, a diffraction signal from the (110) crystal plane comes from graphite with a layer structure perpendicular to the electrode plate, while diffraction signals from the (002) and (004) crystal planes come from graphite with a layer structure parallel to the electrode plate. Therefore, an orientation of the graphite electrode may be described by a ratio of an intensity (or integrated area) of the (002) or (004) diffraction peak to an intensity (or integrated area) of the (110) diffraction peak, that is, $OI=I(002)/I(110)$ or $OI=I(004)/I(110)$, where $I(002)$ represents the intensity of the (002) diffraction peak, $I(004)$ represents the intensity of the (004) diffraction peak, and $I(110)$ represents the intensity of the (110) diffraction peak.

In some embodiments, the second active material layer 3 further includes a second binder, where the second binder may be a polymer such as PAA (polyacrylic acid), SBR (styrene-butadiene rubber), CMC (carboxymethyl cellulose sodium), PVDF (polyvinylidene fluoride), PAN (polyacrylonitrile), or PVA (polyvinyl alcohol), or their functionalized derivatives or copolymers. By adding the second binder, the particles in the second graphite material can be bonded more firmly, enabling the second active material layer 3 to better restrain the silicon-based material in the first active material layer 2, suppressing the swelling of the negative electrode plate 10.

In some embodiments, the second active material layer 3 further includes a second dispersant, where the second dispersant may be CMC (carboxymethyl cellulose sodium).

In a specific embodiment, a mass ratio of the second graphite material, inorganic material, second binder, and second dispersant is 97:0.5:1.5:1.

In some embodiments, the first graphite material in the first active material layer 2 may be one or more selected from the group consisting of hard carbon, soft carbon, and graphite. The OI value of the first graphite material is less than or equal to 10. Similar to the OI value of the second graphite material, the OI value of the first graphite material less than or equal to 10 is beneficial for suppressing swelling during cycling.

In some embodiments, the silicon-based material includes one or more selected from the group consisting of elemental silicon, silicon oxide, and silicon carbide.

In some embodiments, the first active material layer 2 further includes a solid-state electrolyte, where the solid-state electrolyte is at least partially bonded to a surface of the silicon-based material, thereby forming a protective layer on the surface of silicon, further reducing the swelling displacement of silicon, reducing the swelling or contraction of the negative electrode plate 10, and enhancing the structural integrity and structural stability of the negative electrode plate 10. Additionally, the solid-state electrolyte can enhance the lithium intercalation capability of the silicon-based material, improve the ion conduction rate in the negative electrode plate 10, and thus improve the kinetic performance and cycling performance of the secondary battery 100.

In some embodiments, the solid-state electrolyte includes at least one of polymethyl methacrylate, polyvinylidene fluoride, and polyacrylonitrile.

In some embodiments, the first active material layer 2 further includes a first binder, a first dispersant, and a conductive agent.

For the above first binder, the first binder may be a polymer such as PAA (polyacrylic acid), SBR (styrene-butadiene rubber), CMC (carboxymethyl cellulose sodium), PVDF (polyvinylidene fluoride), PAN (polyacrylonitrile), or PVA (polyvinyl alcohol), or their functionalized derivatives or copolymers.

For the above first dispersant, the first dispersant may be CMC (carboxymethyl cellulose sodium).

For the above conductive agent, the conductive agent may be one or more selected from the group consisting of conductive carbon material, SP (conductive carbon black), CNT (carbon nanotubes), VGCF (vinyl glassy carbon fibers), metal particles, and metal fibers, and the mass percentage of the added conductive agent in the first active material layer 2 is 0wt% to 20wt%.

In a specific embodiment, a mass ratio of the first graphite material, silicon-based material, first binder, first dispersant, and conductive agent is 80:10:5.5:2:2.5.

In some embodiments, the secondary battery further includes a free electrolyte solution, where the free electrolyte solution may improve a transport rate of lithium ions, ensure a charge-discharge rate, and thus improve the kinetic performance of the secondary battery.

Since the second active material layer 3 is added to the first active material layer 2, when the secondary battery 100 further includes the free electrolyte solution, the difficulty of penetrating into the first active material layer 2 by the free electrolyte solution is increased, potentially leading to poor wetting of the negative electrode plate 10, reduced retention of the free electrolyte solution in the negative electrode plate 10, and reduced electrochemical performance of the secondary battery 100. However, in this application, due to the addition of the inorganic material, a porosity of the second active material layer 3 is increased, allowing the second active material layer 3 to suppress the swelling displacement of the silicon-based material while reducing the impact on wetting of the second active material layer 3 for the free electrolyte solution. Specifically, as shown in FIG. 4, a porosity of the second active material layer 3 is greater than a porosity of the first active material layer 2, allowing the free electrolyte solution to easily penetrate from the second active material layer 3 into the first active material layer 2, which helps reduce the impact on the wetting of the second active material layer 3 for the free electrolyte solution, reduces concentration polarization, lowers the internal resistance of the secondary battery 100, improves the charge-discharge efficiency and capacity retention rate of the secondary battery 100, and extends the cycling life of the secondary battery 100.

It should be understood that the addition of the inorganic material contributes to formation of more pores in the negative electrode plate 10, which is beneficial for enhancing the wetting of the free electrolyte solution in the negative electrode plate 10, reducing a wetting time of the free electrolyte solution, increasing the retention of the free electrolyte solution in the negative electrode plate 10, increasing the ion transport speed of the free electrolyte solution, enhancing a fast-charge capability of the secondary battery 100, and improving the electrochemical performance of the secondary battery 100.

It should be noted that a wetting time measurement method is as follows: dropping an equal volume of electrolyte, such as 0.05 ml of free electrolyte solution, onto different negative electrode plates 10 and observing a time in which the free electrolyte solution is completely absorbed. This time is the wetting time of the free electrolyte solution. The wetting time reflects the ease of wetting of the negative electrode plate 10. A shorter wetting time indicates easier wetting of the negative electrode plate 10 by the free electrolyte solution.

In some embodiments, the first active material layer 2 may further include the above inorganic material. Since the particle size of the first graphite material is larger than the particle size of the second graphite material, the inorganic material can fill the gaps of first graphite material. During rolling of the negative electrode plate 10, the inorganic material may also provide buffering and lubrication to the first graphite material, helping to reduce the risk that the first graphite material is crushed.

In some embodiments, the ratio of the particle size $D_v50$ of the inorganic material to the particle size $D_v50$ of the first graphite material is less than or equal to 0.23.

In some embodiments, the mass percentage of the inorganic material in the first active material layer 2 is 0.1wt% to 5wt%.

In some embodiments, the secondary battery 100 further includes a separator and a positive electrode plate. The positive electrode plate includes a positive electrode active material layer, and the positive electrode active material includes at least one of lithium cobalt oxide, lithium nickel oxide, lithium nickel cobalt manganese oxide, lithium nickel cobalt aluminum oxide, lithium manganese oxide, lithium nickel oxide, lithium iron manganese phosphate, lithium vanadium phosphate, or lithium iron phosphate. The separator may include a polymer or inorganic matter that is stable to the free electrolyte solution, for example, the separator may include a substrate layer and a surface treatment layer. The substrate layer is a non-woven fabric, film, or composite film with a porous structure, and a material of the substrate layer includes at least one of polyethylene, polypropylene, polyethylene terephthalate, or polyimide. Specifically, a polypropylene porous film, a polyethylene porous film, a polypropylene non-woven fabric, a polyethylene non-woven fabric, or a polypropylene-polyethylene-polypropylene porous composite film may be selected. A surface treatment layer is disposed on at least one surface of the substrate layer, and the surface treatment layer may be a polymer layer, an inorganic matter layer, or a layer formed by mixing a polymer and an inorganic matter. The inorganic matter layer includes inorganic particles and a binder, and the inorganic particles include at least one of alumina, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder includes at least one of polyvinylidene fluoride, a copolymer of vinylidene fluoride-hexafluoropropylene, polyamide, polyacrylonitrile, polyacrylate, polyacrylic acid, polyacrylate salt, polyvinylpyrrolidone, polyvinyl ether, polymethyl methacrylate, polytetrafluoroethylene, or polyhexafluoropropylene. The polymer layer contains a polymer, and the polymer material includes at least one of polyamide, polyacrylonitrile, acrylate polymer, polyacrylic acid, polyacrylate salt, polyvinylpyrrolidone, polyvinyl ether, polyvinylidene fluoride, or poly(vinylidene fluoride-hexafluoropropylene).

To evaluate the beneficial effects of this application, tests were conducted using lithium-ion secondary batteries as an example. In the following examples and comparative examples, unless otherwise specified, the reagents, materials, and instruments used are commercially available.

Example 1

Preparation of negative electrode slurry

Second active material layer slurry: A second graphite material, an inorganic material, a second binder, and a second dispersant were mixed at a mass ratio of 97:0.5:1.5:1, dissolved in deionized water to form a negative electrode slurry with a solid content of 50%, and stirred uniformly for coating. The second graphite material was graphite particles with $D_v50$ of 15 μm, the inorganic material was alumina ($Al_2O_3$) with $D_v50$ of 0.3 μm (that is, a ratio of the particle size $D_v50$ of the inorganic material to the particle size $D_v50$ of the second graphite material was 0.02), the second binder was SBR (styrene-butadiene rubber), and the second dispersant was CMC (carboxymethyl cellulose sodium).

First active material layer slurry: A first graphite material, a silicon-based material, a first binder, a first dispersant, and a conductive agent were mixed at a mass ratio of 80:10:5.5:2:2.5, dissolved in deionized water to form a negative electrode slurry with a solid content of 40%, and stirred uniformly for coating. The silicon-based material was $SiO_2$ (silicon dioxide), the first graphite material was graphite particles, the first binder was PAA (polyacrylic acid), the first dispersant was CMC (carboxymethyl cellulose sodium), and the conductive agent was conductive carbon black.

Preparation of negative electrode plate 10

With a dual-layer coating machine, the second active material layer slurry and the first active material layer slurry were simultaneously and uniformly applied to one surface of a copper foil with a thickness of 8 μm of a negative electrode current collector 1; and dried at 110°C to obtain a negative electrode plate 10 with one side coated with a dual-layer negative electrode active material. After drying, a coating thickness of the dual-layer negative electrode active material was 150 μm. In this step, since the second active material layer slurry was applied to the undried first active material layer slurry, the first active material layer 2 and the second active material layer 3 were mutually soluble, with no distinct interface, reducing an impedance between the first active material layer 2 and the second active material layer 3.

Then, the above coating step was repeated on another surface of the negative electrode plate 10 to obtain a negative electrode plate 10 with two sides coated with the dual-layer negative electrode active material.

After coating, the negative electrode plate 10 was dried, cold-pressed, and cut into a sheet with a dimension of 74 mm×867 mm. An adhesion between the active material layer and the current collector 1 satisfies 10 N/m to 100 N/m. A total porosity of the negative electrode plate 10 satisfies 10% to 30%.

Preparation of positive electrode plate

A positive electrode active material LiCoO$_2$ (lithium cobalt oxide), a conductive agent SuperP (conductive carbon black), and a binder PVDF (polyvinylidene fluoride) were dissolved at a mass ratio of 97:1.4:1.6 in NMP (N-methylpyrrolidone) solution to form a positive electrode slurry with a solid content of 75%, and stirred uniformly.

The positive electrode slurry was applied to one surface of a positive electrode current collector aluminum foil with a thickness of 10 μm, and dried at 110°C to obtain a positive electrode plate with one side coated with the positive electrode active material layer. After drying, a coating thickness of the positive electrode active material layer was 110 μm.

Then, the above coating step was repeated on another surface of the positive electrode plate to obtain a positive electrode plate with two sides coated with the positive electrode active material.

After coating, the positive electrode plate was dried, cold-pressed, and cut into a sheet with a dimension of 74 mm×867 mm. A compacted density of the positive electrode plate was 4.15 g/cm$^3$.

Preparation of free electrolyte solution

In an environment with a water content of less than 10 ppm, organic solvents EC (ethylene carbonate), PC (propylene carbonate), DEC (diethyl carbonate), and EP (ethyl propionate) were mixed at a mass ratio of 3:1:3:3; then lithium hexafluorophosphate (LiPF$_6$) was added to the mixed organic solvent, dissolved, and mixed uniformly to obtain a desired free electrolyte solution. A concentration of LiPF$_6$ was 1 mol/L.

The free electrolyte solution is not specifically limited in this application, and may be selected according to actual needs. As an example, an additive in the free electrolyte solution may include one or more selected from the group consisting of vinylene carbonate (VC), vinyl ethylene carbonate (VEC), succinonitrile (SN), adiponitrile (ADN), 1,3-propene sultone (PST), tris(trimethylsilyl) phosphate (TMSP), trimethyl borate (TMB), and tris(trimethylsilyl) borate (TMSB).

Preparation of separator

The separator includes a substrate layer and a coating layer. The substrate layer was PE (polyethylene) with a thickness of 5 μm, and was coated with alumina ceramic layers with a thickness of 2 μm on two sides of the substrate layer, followed by applying 2.5 mg of binder PVDF (polyvinylidene fluoride) on a side of the ceramic layer facing away from the substrate layer, and drying.

Preparation of lithium-ion secondary battery

The prepared positive electrode plate, separator, and negative electrode plate 10 were stacked in order, with the separator positioned between the positive electrode plate and the negative electrode plate 10 to provide isolation, followed by hot-pressing to form an electrode assembly with a stacked structure.

The electrode assembly was placed in an aluminum-plastic film packaging, and dried in a vacuum oven at 85°C for 12 hours to remove moisture. The prepared free electrolyte solution was injected, followed by processes such as vacuum packaging, standing, formation (charged at a constant current of 0.02C to 3.5V, and then charged at a constant current of 0.1C to 3.9V), shaping, and capacity testing to obtain a lithium-ion secondary battery.

Comparative example 1

A difference from Example 1 is that the second active material layer 3 slurry did not include an inorganic material, and a mass ratio of the second graphite material, second binder, and second dispersant was 97:1.5:1.5.

The following tests were conducted on the lithium-ion secondary batteries of Comparative example 1 and Example 1. Unless explicitly specified, as an example, the test temperature was room temperature, 25°C.

(1) Capacity retention rate test of secondary battery

Charge: In a high-temperature oven at 45°C, the secondary battery was charged at a constant current of 2C to an upper voltage window, then charged at constant voltage to 0.05C, and left standing for 5 min.

Discharge: The battery was discharged at 0.7C to 3.0V.

According to the above charge-discharge process, during the cycling, a discharge capacity of each cycle was recorded and divided by the initial capacity to obtain a capacity retention rate. The discharge capacity of the first discharge was the initial discharge capacity, counted as 100%.

For example, capacity retention rate after 300 cycles=(discharge capacity of 300th cycle/discharge capacity of first cycle)×100%.

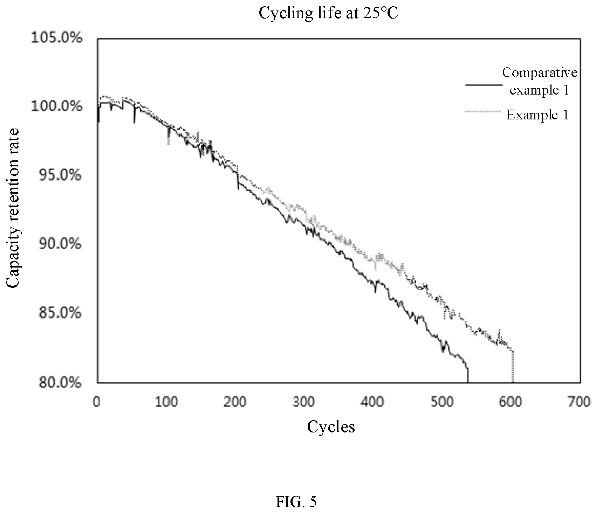

Test results are shown in FIG. 5.

FIG. 5 is a cycling life diagram of the secondary batteries of Comparative example 1 and Example 1. As shown in FIG. 5, under the same cycles, the secondary battery of Example 1 has an improved capacity retention rate compared with the secondary battery of Comparative example 1, indicating that adding an inorganic material to the second active material layer 3, with the ratio of the particle size $D_v50$ of the inorganic material to the particle size $D_v50$ of the second graphite material being less than 0.1, can provide lubrication and buffering to the second graphite material, reducing graphite particle breakage, decreasing capacity loss of the secondary battery 100, improving the capacity retention rate of the secondary battery 100, and enhancing the cycling performance of the secondary battery 100.

(2) Swelling rate test of secondary battery

Thicknesses of three positions of the lithium-ion secondary battery were measured, taking the average. It should be noted that the measurement was implemented on the same three positions of different lithium-ion secondary batteries.

During cycling, the average thickness of the secondary battery was recorded, and a difference between the average thickness after each cycle of the secondary battery and an initial average thickness of the secondary battery was divided by the initial average thickness of the secondary battery to obtain a secondary battery swelling rate. The average thickness of the secondary battery at 0 cycles was the initial average thickness.

For example, secondary battery swelling rate after 300 cycles=[(average thickness of secondary battery after 300th cycle-initial average thickness of secondary battery)/initial average thickness of the secondary battery]×100%.

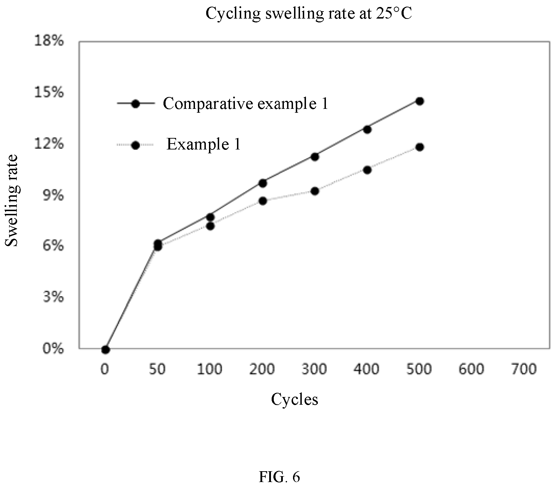

Test results are shown in FIG. 6.

FIG. 6 is a cycling swelling rate diagram of the secondary batteries of Comparative example 1 and Example 1. As shown in FIG. 6, under the same cycles, the secondary battery of Example 1 has a reduced swelling rate compared with the secondary battery of Comparative example 1, indicating that adding an inorganic material to the second active material layer 3 can reduce the swelling rate of the secondary battery 100. It should be particularly noted that the reason for the difference in the swelling rates between Comparative example 1 and Example 1 is that the second active material layer in Comparative example 1 does not contain inorganic particles, resulting in insufficient wetting of the first active material layer by the free electrolyte solution, insufficient retention of the free electrolyte solution in the first active material layer, and more severe lithium precipitation in the negative electrode plate compared with Example 1. The precipitated lithium dendrites cause an increase in a volume of the secondary battery 100, manifested as an increased swelling rate.

(3) Lithium precipitation degree test of negative electrode plate 10

The secondary battery after 300 cycles was disassembled. The lithium precipitation was visually observed on the negative electrode plate 10, and a degree of lithium precipitation was determined as "no precipitation", "slight", "moderate", or "severe" based on the following criteria.

(1) There was no visible lithium precipitation on the negative electrode plate 10-no precipitation.
(2) Lithium precipitation positions on each negative electrode plate 10 were fewer than 3, and/or a lithium precipitation area was less than 10% of an area of the negative electrode plate 10-slight.
(3) Lithium precipitation positions on each negative electrode plate 10 were greater than or equal to 3 or less than or equal to 10, and/or the lithium precipitation area was greater than or equal to 10% or less than or equal to 50% of an area of the negative electrode plate 10-moderate.
(4) Lithium precipitation positions on each negative electrode plate 10 were greater than 10, and/or a lithium precipitation area was greater than 50% of an area of the negative electrode plate 10-severe.

Test results: The lithium precipitation degree of the negative electrode plate 10 of Comparative example 1 was "moderate", and that of Example 1 was "slight", indicating that adding an inorganic material to the second active material layer 3 can mitigate lithium precipitation of the negative electrode plate 10, thereby reducing the swelling rate of the secondary battery 100 and improving the cycling performance of the secondary battery 100.

(4) Porosity test of negative electrode plate 10

With a true density tester (AccuPyc II 1340), the porosity of the electrode plate was tested.

Analysis principle: Based on Archimedes' principle (density=mass/volume) and Boyle's law (PV=nRT), by replacing a liquid with gas in Archimedes' principle, a true volume of a tested material can be accurately measured using the gas displacement method. The gas may be an inert gas with a small molecular diameter to improve measurement precision.

Sample preparation: The negative electrode plate 10 was punched into circular pieces with a diameter of 10 mm or 14 mm. More than 40 pieces were prepared.

Result calculation: An apparent volume of the sample $V_1$ was calculated based on a dimension of the negative electrode plate 10, and was equal to $S \times H \times$ quantity of samples (S was a base area of the sample, and H was the thickness of the electrode plate), and a true volume $V_2$ was obtained based on the above test results. In this case, a porosity was equal to $(V_1-V_2) \times 100\%/V_1$.

Test results: A total porosity of the negative electrode plate 10 of Comparative example 1 was 37.5%, with a porosity of the first active material layer 2 being 38% and a porosity of the second active material layer 3 being 37%. A total porosity of the negative electrode plate 10 of Example 1 was 40.5%, with a porosity of the first active material layer 2 being 38% and a porosity of the second active material layer 3 being 43%. This indicates that adding an inorganic material to the second active material layer 3 can increase the porosity of the second active material layer 3, thereby increasing the overall porosity of the negative electrode plate 10, which is beneficial for enhancing the wetting of the free electrolyte solution.

A proportion of a total volume of pores with a diameter less than 3 μm to a total volume of pores in the negative electrode plate 10 was 67%.

(5) Compacted density test of negative electrode plate 10

The negative electrode plate 10 was prepared after cold-pressing and cutting; a mass m of the negative electrode plate 10 was weighed; a length L, width W, and thickness H of the negative electrode plate 10 were measured; and a compacted density ρ of the negative electrode plate 10 was calculated using the following formula:

$$\rho=m/(L \times W \times H)$$

(6) Volumetric energy density test of secondary battery 100

The secondary battery 100 was placed in a constant temperature chamber at 25°C±2°C for 30 minutes to reach a constant temperature. The constant-temperature secondary battery was charged at a constant current of 0.5C until a voltage reached a full-charge voltage; then charged at the constant full-charge voltage until a current reached 0.05C; and discharged at 0.2C to a voltage of 3.0V. Discharge energy was recorded.

Volumetric energy density=discharge energy/(length of secondary battery 100×width of secondary battery 100×thickness of secondary battery 100)

(7) Wetting time test of free electrolyte solution

An equal volume of free electrolyte solution, such as 0.05 ml of free electrolyte solution, was dropped onto different negative electrode plates 10, and a time in which the free electrolyte solution was completely absorbed was observed.

To investigate the requirements for the ratio of the particle size $D_v50$ of the inorganic material to the particle size $D_v50$ of the second graphite material, experiments were conducted by adjusting the particle sizes of the second graphite material and the inorganic material used in Example 1. The test results are shown in Table 1 below, where in Examples A1 to A13, all parameters are the same as in Example 1 except for the ratio of the particle size $D_v50$ of the inorganic material to the particle size $D_v50$ of the second graphite material listed in Table 1. The secondary batteries underwent 300 cycles.

**Table 1**

| | Ratio of particle size $D_v50$ of inorganic material to particle size $D_v50$ of second graphite material | Compacted density /(g/cm³) | Capacity retention rate (%) |
|---|---|---|---|
| Example A1 | 0.03 | 1.70 | 94.1 |
| Example A2 | 0.035 | 1.70 | 94.6 |
| Example A3 | 0.04 | 1.70 | 94.9 |
| Example A4 | 0.045 | 1.70 | 95.1 |

(continued)

| | Ratio of particle size $D_v50$ of inorganic material to particle size $D_v50$ of second graphite material | Compacted density /(g/cm$^3$) | Capacity retention rate (%) |
|---|---|---|---|
| Example A5 | 0.05 | 1.70 | 95.0 |
| Example A6 | 0.1 | 1.70 | 94.8 |
| Example A7 | 0.15 | 1.70 | 94.4 |
| Example A8 | 0.2 | 1.70 | 94.3 |
| Example A9 | 0.21 | 1.70 | 94.3 |
| Example A10 | 0.22 | 1.69 | 94.2 |
| Example A11 | 0.23 | 1.67 | 94.1 |
| Example A12 | 0.24 | 1.65 | 94.0 |
| Example A13 | 0.25 | 1.62 | 94.0 |

As shown in Table 1, when the ratio of the particle size $D_v50$ of the inorganic material to the particle size $D_v50$ of the second graphite material is greater than 0.23, the compacted density begins to decrease, leading to a narrower processing window for the second graphite material; and when the ratio is less than 0.1, the capacity retention rate increases rapidly. Therefore, the ratio of the particle size $D_v50$ of the inorganic material to the particle size $D_v50$ of the second graphite material should not exceed 0.23 to ensure a relatively wide processing window for the second graphite material. In this application, considering the capacity retention rate, the ratio of the particle size $D_v50$ of the inorganic material to the particle size $D_v50$ of the second graphite material is set to be less than 0.1. Further, as shown in Table 1, when the ratio of the particle size $D_v50$ of the inorganic material to the particle size $D_v50$ of the second graphite material is 0.04 to 0.1, the capacity retention rate is better because, within this range, the overall overpressure condition of the first active material layer 2 and the second active material layer 3 is good, with minimal particle breakage, low capacity loss, and good kinetic performance of the secondary battery 100. Therefore, in this application, the ratio of the particle size $D_v50$ of the inorganic material to the particle size $D_v50$ of the second graphite material is preferably 0.04 to 0.1.

To investigate the optimal range of the mass percentage of the inorganic material in the second active material layer 3, experiments were conducted by adjusting the amount of inorganic material added in Example 1, setting the mass percentage of the inorganic material in the second active material layer 3 to 0.01wt%, 0.05wt%, 0.1wt%, 0.5wt%, 1wt%, 2wt%, 3wt%, 4wt%, 5wt%, 6wt%, and 7wt%, respectively. The test results are shown in Table 2 below, where in Examples B1 to B10, all parameters are the same as in Example 1 except for the mass percentage of the inorganic material in the second active material layer 3. The secondary batteries underwent 300 cycles.

**Table 2**

| | Mass percentage of inorganic material in second active material layer (wt%) | Compacted density/(g/cm$^3$) | Energy density/(Wh/L) | Wetting time (s) |
|---|---|---|---|---|
| Example B1 | 0.01 | 1.60 | 752.8 | 28 |
| Example B2 | 0.05 | 1.60 | 752.7 | 28 |
| Example B3 | 0.1 | 1.67 | 759.3 | 26 |
| Example B4 | 0.5 | 1.70 | 776 | 24 |
| Example B5 | 1 | 1.73 | 781.3 | 22 |
| Example B6 | 2 | 1.76 | 781.8 | 21 |
| Example B7 | 3 | 1.78 | 782.1 | 20 |
| Example B8 | 4 | 1.79 | 778.7 | 19 |
| Example B9 | 5 | 1.80 | 773.6 | 18 |
| Example B10 | 6 | 1.80 | 764.0 | 18 |
| Example B11 | 7 | 1.80 | 756.6 | 18 |

It should be noted that in Table 2, the mass ratio of the second graphite material, second binder, and second dispersant is 97:1.5:1, and the mass ratio of the inorganic material to the components in the second active material layer slurry is calculated based on the mass percentage of the inorganic material in the second active material layer 3 in Table 2.

As shown in Table 2, when the mass percentage of the inorganic material in the second active material layer 3 is less than 0.1wt%, the lubrication and buffering provided by the inorganic material to the second graphite material is not significant, resulting in more crushed active material particles during the cold-pressing of the electrode plate, leading to battery capacity loss, lower energy density of the secondary battery 100, and a higher compacted density of the negative electrode plate 10, significantly increasing the wetting time of the free electrolyte solution; when the mass percentage of the inorganic material in the second active material layer 3 is greater than 5wt%, the inorganic material occupies a large proportion of the second active material layer 3, severely reducing the energy density. Therefore, to balance the lubrication and buffering provided the inorganic material to the second graphite material and the energy density of the secondary battery 100, the mass percentage of the inorganic material in the second active material layer 3 is set to 0.1wt% to 5wt%. Further, the mass percentage of the inorganic material in the second active material layer 3 is preferably 1wt% to 3wt%.

To investigate the optimal range of the ratio of the particle size $D_v50$ of the silicon-based material to the particle size $D_v50$ of the first graphite material, experiments were conducted by adjusting the particle sizes $D_v50$ of the silicon-based material and the first graphite material in Example 1. The test results are shown in Table 3 below, where in Examples C1 to C11, all parameters are the same as in Example 1 except for the particle size $D_v50$ of the silicon-based material and the particle size $D_v50$ of the first graphite material. The secondary batteries underwent 300 cycles.

**Table 3**

| | Ratio of particle size $D_v50$ of silicon-based material to particle size $D_v50$ of first graphite material | Swelling rate (%) | Capacity retention rate (%) |
|---|---|---|---|
| Example C1 | 0.03 | 10.6 | 80.1 |
| Example C2 | 0.05 | 10.6 | 83.3 |
| Example C3 | 0.1 | 10.7 | 86.5 |
| Example C4 | 0.15 | 10.8 | 91.7 |
| Example C5 | 0.2 | 11.0 | 94.4 |
| Example C6 | 0.25 | 11.3 | 95.1 |
| Example C7 | 0.3 | 12.0 | 95.8 |
| Example C8 | 0.4 | 13.1 | 95.9 |
| Example C9 | 0.5 | 14.3 | 96.1 |
| Example C10 | 0.6 | 15.9 | 96.3 |
| Example C11 | 0.7 | 17.3 | 96.4 |

As shown in Table 3, when the ratio of the particle size $D_v50$ of the silicon-based material to the particle size $D_v50$ of the first graphite material is less than 0.1, the capacity retention rate of the secondary battery decreases rapidly because a smaller particle size of the silicon-based material results in a larger specific surface area, leading to excessive side reactions and accelerated cycling attenuation of the secondary battery; when the ratio of the particle size $D_v50$ of the silicon-based material to the particle size $D_v50$ of the first graphite material is greater than 0.5, the swelling rate of the secondary battery increases rapidly because the particle sizes of the silicon-based material and the first graphite material are relatively close, resulting in poor co-embedding of the silicon-based material and the first graphite material, causing a sharp increase in the swelling rate of the secondary battery. Therefore, in this application, the ratio of the particle size $D_v50$ of the silicon-based material to the particle size $D_v50$ of the first graphite material is set to 0.1 to 0.5.

From the data in Table 3, it can be further learned that when the ratio of the particle size $D_v50$ of the silicon-based material to the particle size $D_v50$ of the first graphite material is greater than 0.3, the trend of capacity retention rate increase becomes relatively flat with increasing ratio, so the benefit of increasing the ratio on the capacity retention rate is relatively small when the ratio is greater than 0.3; when the ratio is less than 0.2, the trend of swelling rate decrease becomes relatively flat with decreasing ratio, so the benefit of decreasing the ratio on the swelling rate is relatively small when the swelling rate is less than 0.2. Considering both swelling rate and capacity retention rate, the ratio of the particle size $D_v50$ of the silicon-based material to the particle size $D_v50$ of the first graphite material is preferably 0.2 to 0.3, at which the packing of the silicon-based material and the first graphite material is the tightest, and the porosity of the first active material layer is minimized. The particle size $D_v50$ of the silicon-based material may be 4 $\mu$m to 10 $\mu$m, and the particle size $D_v50$ of the first graphite material may be 16 $\mu$m to 40 $\mu$m.

To investigate the optimal range of the mass ratio of the second active material layer 3 to the first active material layer 2, experiments were conducted by adjusting the coating thicknesses of the first active material layer slurry and the second active material layer slurry in Example 1. The test results are shown in Table 4 below, where in Examples D1 to D10, all parameters are the same as in Example 1 except for the masses of the first active material layer 2 and the second active material layer 3. The secondary batteries underwent 300 cycles.

**Table 4**

| | Mass ratio of second active material layer to first active material layer | Swelling rate (%) | Wetting time (s) |
|---|---|---|---|
| Example D1 | 0.05 | 11.6 | 21 |
| Example D2 | 0.1 | 10.9 | 21 |
| Example D3 | 0.2 | 10.4 | 22 |
| Example D4 | 0.3 | 9.9 | 22 |
| Example D5 | 0.5 | 9.7 | 23 |
| Example D6 | 1 | 9.6 | 23 |
| Example D7 | 1.5 | 9.6 | 23 |
| Example D8 | 2 | 9.5 | 25 |
| Example D9 | 2.5 | 9.5 | 30 |
| Example D10 | 3 | 9.4 | 33 |

It should be noted that in Table 4, the masses of the second active material layer 3 and the first active material layer 2 are controlled by controlling the coating thicknesses of the first active material layer slurry and the second active material layer slurry, with the total coating thickness of the second active material layer 3 and the first active material layer 2 being 150 $\mu$m.

As shown in Table 4, when the mass ratio of the second active material layer 3 to the first active material layer 2 is less than 0.2, the suppression of the swelling of the silicon-based material in the first active material layer 2 by the second active material layer 3 is limited, leading to a faster increase in the swelling rate of the secondary battery; when the mass ratio of the second active material layer 3 to the first active material layer 2 is greater than 2, the wetting time of the free electrolyte solution significantly increases, indicating that the compacted density of the first active material layer 2 is high, making it difficult to wet, and an excessively high compacted density may cause particle breakage in the first active material layer 2. Therefore, in this embodiment, the mass ratio of the second active material layer 3 to the first active material layer 2 is in the range of 0.2:1 to 2:1, balancing the suppression of the second active material layer 3 on the swelling of the silicon-based material and the wetting time of the free electrolyte solution.

To investigate the optimal range of the mass ratio of the silicon-based material to the first graphite material, experiments were conducted by adjusting the input amounts of the silicon-based material and the first graphite material in Example 1. The test results are shown in Table 5 below, where in Examples E1 to E10, all parameters are the same as in Example 1 except for the input amounts of the silicon-based material and the first graphite material. The secondary batteries underwent 300 cycles.

**Table 5**

| | $m_1/(m_1+m_2)$ (%) | Swelling rate (%) | Lithium precipitation degree (no precipitation, slight, moderate, or severe) | Energy density/(Wh/L) |
|---|---|---|---|---|
| Example E1 | 1 | 8.1 | Slight | 643 |
| Example E2 | 3 | 9.5 | Slight | 704 |
| Example E3 | 5 | 10.7 | Slight | 755 |
| Example E4 | 10 | 11.7 | Slight | 791 |
| Example E5 | 15 | 12.0 | Slight | 826 |

(continued)

| | $m_1/(m_1+m_2)$ (%) | Swelling rate (%) | Lithium precipitation degree (no precipitation, slight, moderate, or severe) | Energy density/(Wh/L) |
|---|---|---|---|---|
| Example E6 | 20 | 12.3 | Slight | 852 |
| Example E7 | 25 | 12.7 | Slight | 873 |
| Example E8 | 30 | 13.2 | Slight | 900 |
| Example E9 | 35 | 14.0 | Moderate | 930 |
| Example E10 | 40 | 15.0 | Severe | 951 |

It should be noted that in Table 5, the first dispersant, conductive agent, MMA (methyl methacrylate), and AIBN (azobisisobutyronitrile) are added at a mass ratio of 2:2:5.5:0.5, and a ratio of masses of the silicon-based material and the first graphite material to the components in the first active material layer slurry is calculated based on $m_1/(m_1+m_2)$ in Table 5.

As shown in Table 5, when $m_1/(m_1+m_2)$ is greater than 30, due to the increased content of the silicon-based material, the suppression of the swelling of the silicon-based material by the first graphite material is limited, resulting in a higher swelling rate of the secondary battery, lower capacity retention rate, and severe lithium precipitation, deteriorating the kinetic performance of the secondary battery; when $m_1/(m_1+m_2)$ is less than 5, the energy density of the secondary battery decreases sharply. Therefore, in this application, the ratio of the mass of the silicon-based material to the total mass of the first graphite material and the silicon-based material is set to 5% to 30%, to ensure the suppression by the first graphite material on the silicon-based material while maintaining a high energy density of the secondary battery.

To evaluate the beneficial effects of adding an inorganic material to the first active material layer 2, tests were conducted using lithium-ion secondary batteries as an example.

Example 2

The difference from Example 1 is that the first active material layer 2 slurry further includes an inorganic material alumina ($Al_2O_3$), with a mass ratio of the first graphite material, silicon-based material, inorganic material, first binder, first dispersant, and conductive agent of 80:10:0.5:5:2:2.5.

The following tests were conducted on the lithium-ion secondary batteries of Example 1 and Example 2. Unless explicitly specified, as an example, the test temperature was room temperature, 25°C.

(1) Capacity retention rate test

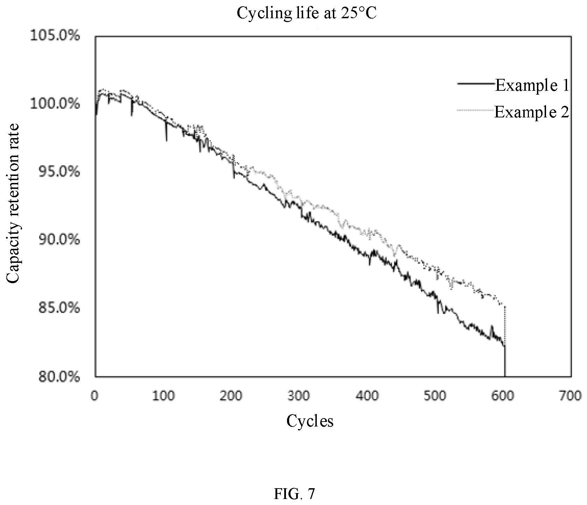

FIG. 7 is a cycling life diagram of the secondary batteries of Example 1 and Example 2. As shown in FIG. 7, under the same cycles, the secondary battery of Example 2 has an improved capacity retention rate compared with the secondary battery of Example 1, indicating that when an inorganic material is included in the second active material layer 3, adding an inorganic material to the first active material layer 2 can provide lubrication and buffering to the first graphite material, reducing graphite particle breakage, decreasing capacity loss of the secondary battery 100, further improving the capacity retention rate of the secondary battery, and enhancing the cycling performance of the secondary battery.

(2) Swelling rate test of secondary battery

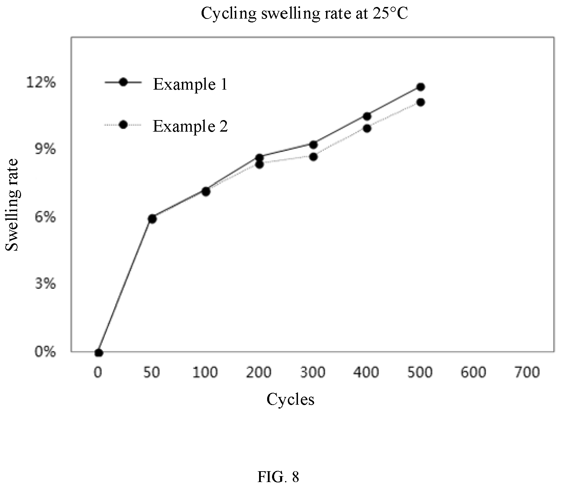

FIG. 8 is a cycling swelling rate diagram of the secondary batteries of Example 1 and Example 2. As shown in FIG. 8, after 50 cycles, under the same cycles, the secondary battery of Example 2 has a reduced swelling rate compared with the secondary battery of Example 1, indicating that when an inorganic material is included in the second active material layer 3, adding an inorganic material to the first active material layer 2 can further reduce the swelling rate of the secondary battery. One reason for the difference in the swelling rates between Example 2 and Example 1 is that after adding an inorganic material to the first active material layer 2, the breakage of graphite particles in the first graphite material is alleviated, allowing more of the first graphite material to better suppress the swelling displacement of the silicon-based material.

(3) Lithium precipitation degree test of secondary battery

Test results: The lithium precipitation degree of the negative electrode plate 10 of Example 2 is "no precipitation," and that of Example 1 is "slight", indicating that adding an inorganic material to the first active material layer 2 can further improve the wetting of the free electrolyte solution in the first active material layer 2, and increase the retention of the free electrolyte solution in the negative electrode plate 10, thereby mitigating lithium precipitation of the negative electrode plate 10, and improving the cycling performance of the secondary battery 100. Since the lithium precipitation degree of the negative electrode plate 10 in Example 2 is lower than that in Example 1, the swelling rate of the secondary battery 100 is also reduced.

In the secondary battery 100 and electric device 1000 in the secondary battery embodiments of this application, the ratio of the particle size $D_v50$ of the inorganic material to the particle size $D_v50$ of the second graphite material is less than 0.1, allowing the inorganic material to fill the gaps of the second graphite material, thereby providing lubrication and buffering to the second graphite material, reducing graphite particle breakage, mitigating overpressure of the second active material layer 3, maintaining the suppression by the second active material layer 3 on the swelling of the silicon-based material and the capacity of the negative electrode plate 10, enhancing the structural integrity and structural stability of the negative electrode plate, and mitigating performance deterioration of the negative electrode plate 10. Additionally, in the case that the secondary battery further includes a free electrolyte solution, since the inorganic material fills the gaps of the second graphite material, the porosity of the second active material layer 3 can be increased, allowing the free electrolyte solution to easily penetrate from the second active material layer 3 to the first active material layer 2, thereby reducing concentration polarization, lowering internal resistance, increasing the retention of the free electrolyte solution in the negative electrode plate 10, increasing ion transport speed, enhancing the fast-charge capability, and extending the cycling life of the secondary battery 100. Adding an inorganic material to the first active material layer 2 can mitigate graphite particle breakage in the first active material layer 2, further improve the wetting of the free electrolyte solution in the negative electrode plate 10, and enhance the capacity of the negative electrode plate 10 and the fast-charge capability of the secondary battery 100.

Finally, it should be noted that the above embodiments are only used to illustrate the technical solutions of this application and are not intended to limit this application; under the concept of this application, technical features in the above embodiments or different embodiments can also be combined, steps can be implemented in any order, and there are many other variations of different aspects of this application as described above, which are not provided in detail for brevity; although this application has been described in detail with reference to the foregoing embodiments, those of ordinary skill in the art should understand that modifications can still be made to the technical solutions described in the foregoing embodiments, or equivalent substitutions can be made to some of the technical features; such modifications or substitutions do not cause the essence of the corresponding technical solutions to depart from the scope of the technical solutions of some embodiments of this application.

## Claims

1. A secondary battery, comprising a negative electrode plate, wherein the negative electrode plate comprises a current collector, a first active material layer, and a second active material layer, the first active material layer is disposed on at least one surface of the current collector, the second active material layer is disposed on a side of the first active material layer facing away from the current collector, the first active material layer comprises a silicon-based material and a first graphite material, the second active material layer comprises a second graphite material and an inorganic material, and a ratio of a particle size $D_v50$ of the inorganic material to a particle size $D_v50$ of the second graphite material is less than or equal to 0.23.

2. The secondary battery according to claim 1, wherein the ratio of the particle size $D_v50$ of the inorganic material to the particle size $D_v50$ of the second graphite material is in a range of 0.04 to 0.1.

3. The secondary battery according to claim 2, wherein the particle size $D_v50$ of the inorganic material is 0.3 $\mu$m to 2 $\mu$m, and the particle size $D_v50$ of the second graphite material is 10 $\mu$m to 15 $\mu$m.

4. The secondary battery according to any one of claims 1 to 3, wherein a mass percentage of the inorganic material in the second active material layer is 0.1wt% to 5wt%.

5. The secondary battery according to claim 4, wherein the mass percentage of the inorganic material in the second active material layer is 1wt% to 3wt%.

6. The secondary battery according to any one of claims 1 to 5, wherein a mass ratio of the second active material layer to the first active material layer is 0.2:1 to 2:1.

7. The secondary battery according to any one of claims 1 to 6, wherein a mass of the silicon-based material is denoted as $m_1$, a mass of the first graphite material is denoted as $m_2$, and $m_1/(m_1+m_2)$ is 5% to 30%.

8. The secondary battery according to any one of claims 1 to 7, wherein a ratio of a particle size $D_v50$ of the silicon-based material to a particle size $D_v50$ of the first graphite material is 0.1 to 0.5.

9. The secondary battery according to claim 8, wherein the ratio of the particle size $D_v50$ of the silicon-based material to the particle size $D_v50$ of the first graphite material is 0.2 to 0.3.

10. The secondary battery according to claim 9, wherein the particle size $D_v50$ of the silicon-based material is 4 $\mu$m to 10 $\mu$m, and the particle size $D_v50$ of the first graphite material is 16 $\mu$m to 40 $\mu$m.

11. The secondary battery according to any one of claims 1 to 10, wherein the inorganic material comprises one or more selected from the group consisting of alumina, garnet, magnesium oxide, titanium oxide, hafnium dioxide, tin oxide, cerium dioxide, nickel oxide, zinc oxide, calcium oxide, zirconium oxide, yttrium oxide, boehmite, aluminum hydroxide, magnesium hydroxide, calcium hydroxide, and barium sulfate.

12. The secondary battery according to claim 11, wherein the inorganic material is alumina and/or boehmite.

13. The secondary battery according to any one of claims 1 to 12, wherein the silicon-based material comprises one or more selected from the group consisting of elemental silicon, silicon oxide, silicon carbide, and a silicon alloy.

14. The secondary battery according to any one of claims 1 to 13, wherein the secondary battery further comprises a free electrolyte solution.

15. The secondary battery according to any one of claims 1 to 14, wherein the first active material layer comprises the inorganic material.

16. An electric device, comprising the secondary battery according to any one of claims 1 to 15 and a load, wherein the secondary battery is configured to supply power to the load.

100　　　200　　　1000

Electric device

Secondary battery

Load

FIG. 1

10

X

3

2

1

FIG. 2

FIG. 3

FIG. 4

Cycling life at 25°C

FIG. 5

Cycling swelling rate at 25°C

FIG. 6

Cycling life at 25°C

FIG. 7

Cycling swelling rate at 25°C

FIG. 8

## INTERNATIONAL SEARCH REPORT

| | International application No. |
|---|---|
| | **PCT/CN2025/071089** |

**A. CLASSIFICATION OF SUBJECT MATTER**

H01M4/13(2010.01)i; H01M4/583(2010.01)i; H01M4/62(2006.01)i; H01M4/04(2006.01)i; H01M10/0525(2010.01)i

According to International Patent Classification (IPC) or to both national classification and IPC

**B. FIELDS SEARCHED**

Minimum documentation searched (classification system followed by classification symbols)

IPC:H01M4/-,H01M10/-

Documentation searched other than minimum documentation to the extent that such documents are included in the fields searched

Electronic data base consulted during the international search (name of data base and, where practicable, search terms used)

DWPI, CNTXT, JPTXT, WOTXT, EPTXT, 中国期刊网全文数据库, CJFD, ISI web of science: 电池, 电芯, 负极, 活性材料, 石墨, 无机, 硅, si, D50, DV50, battery, cell, active material, graphite, inorganic, silicon

**C. DOCUMENTS CONSIDERED TO BE RELEVANT**

| Category* | Citation of document, with indication, where appropriate, of the relevant passages | Relevant to claim No. |
|---|---|---|
| Y | CN 117352654 A (NINGDE AMPEREX TECHNOLOGY LTD.) 05 January 2024 (2024-01-05) description, paragraphs 30 and 37 | 1-16 |
| Y | CN 117393696 A (NINGDE AMPEREX TECHNOLOGY LTD.) 12 January 2024 (2024-01-12) description, paragraphs 5, 7 and 9 | 1-16 |
| PX | CN 118198256 A (NINGDE AMPEREX TECHNOLOGY LTD.) 14 June 2024 (2024-06-14) description, paragraphs 6-26 | 1-16 |
| Y | CN 115148960 A (NINGDE AMPEREX TECHNOLOGY LTD. et al.) 04 October 2022 (2022-10-04) description, paragraphs 5-11 | 1-16 |
| A | US 2024105910 A1 (TOYOTA MOTOR CO., LTD.) 28 March 2024 (2024-03-28) description, paragraphs 22-25 | 1-16 |
| A | CN 111542949 A (LG CHEM LTD.) 14 August 2020 (2020-08-14) description, paragraphs 21-26 | 1-16 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 March 2025** | **09 April 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2025/071089** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 117766674 A (TOYOTA MOTOR CORP.) 26 March 2024 (2024-03-26) description, paragraphs 14-21 | 1-16 |
| | CN 117015870 A (CONTEMPORARY AMPEREX TECHNOLOGY CO., LTD.) 07 November 2023 (2023-11-07) | |

Form PCT/ISA/210 (second sheet) (July 2022)

## INTERNATIONAL SEARCH REPORT
### Information on patent family members

International application No.

**PCT/CN2025/071089**

| Patent document cited in search report | | | Publication date (day/month/year) | Patent family member(s) | | | Publication date (day/month/year) |
|---|---|---|---|---|---|---|---|
| CN | 117352654 | A | 05 January 2024 | None | | | |
| CN | 117393696 | A | 12 January 2024 | None | | | |
| CN | 118198256 | A | 14 June 2024 | None | | | |
| CN | 115148960 | A | 04 October 2022 | WO | 2022206151 | A1 | 06 October 2022 |
| | | | | US | 2023261180 | A1 | 17 August 2023 |
| | | | | EP | 4318658 | A1 | 07 February 2024 |
| US | 2024105910 | A1 | 28 March 2024 | CN | 117766674 | A | 26 March 2024 |
| | | | | DE | 102023125862 | A1 | 28 March 2024 |
| | | | | JP | 2024047223 | A | 05 April 2024 |
| | | | | JP | 7609147 | B2 | 07 January 2025 |
| CN | 111542949 | A | 14 August 2020 | KR | 20190115706 | A | 14 October 2019 |
| | | | | KR | 102386321 | B1 | 14 April 2022 |
| | | | | US | 2020335769 | A1 | 22 October 2020 |
| | | | | EP | 3719877 | A1 | 07 October 2020 |
| | | | | WO | 2019194433 | A1 | 10 October 2019 |
| | | | | CN | 111542949 | B | 04 August 2023 |
| CN | 117766674 | A | 26 March 2024 | JP | 2024047223 | A | 05 April 2024 |
| | | | | JP | 7609147 | B2 | 07 January 2025 |
| | | | | DE | 102023125862 | A1 | 28 March 2024 |
| | | | | US | 2024105910 | A1 | 28 March 2024 |
| CN | 117015870 | A | 07 November 2023 | None | | | |

Form PCT/ISA/210 (patent family annex) (July 2022)

**REFERENCES CITED IN THE DESCRIPTION**

**Patent documents cited in the description**

• CN 202410383524